Europäisches Patentamt

European Patent Office

Office européen des brevets

(19)

(11) Veröffentlichungsnummer: **0 086 505**
B1

(12) **EUROPÄISCHE PATENTSCHRIFT**

(45) Veröffentlichungstag der Patentschrift:
04.09.85

(21) Anmeldenummer: 83200022.8

(22) Anmeldetag: 10.01.83

(51) Int. Cl.⁴: **F 16 C 15/00**, G 01 M 15/00,
G 01 N 3/00

(54) Verfahren zur Verhinderung der durch plastisches Fliessen bei der Schleuderprüfung verursachten Aufweitung der Nabenbohrung eines Turbomaschinenteils.

(30) Priorität: 11.02.82 CH 851/82

(43) Veröffentlichungstag der Anmeldung:
24.08.83 Patentblatt 83/34

(45) Bekanntmachung des Hinweises auf die Patenterteilung:
04.09.85 Patentblatt 85/36

(84) Benannte Vertragsstaaten:
CH DE FR GB LI

(56) Entgegenhaltungen:
FR - A - 2 008 277

BRENNSTOFFE-WÄRME-KRAFT, Band 27, Nr. 6, Juni 1975, Seiten 258-262, W. WERNER: "Vakuum-, Wucht- und Schleuderanlage für Turbinenläufer"

(73) Patentinhaber: BBC Aktiengesellschaft Brown, Boveri & Cie., Haselstrasse, CH-5401 Baden (CH)

(72) Erfinder: Schröder, Günther, Dr. Dipl.-Ing., Dolderweg 597, CH-5413 Birmenstorf (CH)

## Beschreibung

Die Erfindung geht aus von einem Verfahren zur Verhinderung der Aufweitung der Nabenbohrung eines Turbomaschinenteils nach der Gattung des Oberbegriffs des Anspruchs 1.

Bei der Fertigung von turbomaschinen-Bauteilen stellt die mit bis zu 130% Nenndrehzahl durchgeführte Schleuderprüfung eine kritische Phase dar. Beim Schleudern wird an der innersten Faser des Bauteils, d.h. an der Innenfläche der Nabenbohrung, welche den höchsten Tangentialspannungen (Ringspannung) unterworfen ist, die Streckgrenze überschritten und es findet ein plastisches Fliessen von 0,2 bis 2% statt. Durch das Auftreten dieser irreversiblen Verformung ist man gezwungen, die Nabenbohrung spanabhebend nachzuarbeiten, was eine Verteuerung des Werkstücks bedeutet. Das plastische Fliessen verursacht ausserdem unkontrollierbare Eigenspannungen im Bereich der Nabenbohrung, was sich auf das Betriebsverhalten des Maschinenteils nachteilig auswirken kann.

Aus der Literatur sind Verfahren bekannt, wie durch Einbringen von Druckvorspannungen in einer Bohrung die Dauerwechselfestigkeit gesteigert werden kann (H. Hertel, Ermüdungsfestigkeit der Konstruktionen, Berlin, H, N-Y, Springer 1969, S. 223 bis 233). Es sind ausserdem Verfahren bekannt, die Oberfläche von Werkstücken, insbesondere von Rotationskörpern durch Walzen zu verändern, wobei Glattwalzen, Masswalzen und Festwalzen unterschieden werden (VDI-Richtlinien, Oberflächen-Feinwalzen, VDI 3177, März 1963).

Der Erfindung liegt die Aufgabe zugrunde, die bei der Schleuderprüfung von hochbeanspruchten rotierenden Turbomaschinenteilen an der Nabenbohrung auftretende irreversible plastische Aufweitung sowie das damit verbundene Einbringen unkontrollierbarer Restspannungen zu vermeiden. Eine weitere Aufgabe der Erfindung besteht in der Erhöhung der Dauerwechselfestigkeit am bohrungsrand und dem fortfall zusätzlicher Nachbearbeitung der Nabenbohrung.

Diese Aufgabe wird durch die im kennzeichnenden Teil des Anspruchs 1 angegebenen Merkmale gelöst.

Der massgebende Leitgedanke der Erfindung besteht darin, die normalerweise beim Schleuderversuch an der Nabenbohrung auftretende unkontrollierbare Veränderung bezüglich Geometrie und eingebrachtem Spannungszustand quasi vor dem Schleudern vorwegzunehmen bzw. durch einen gezielten und kontrollierbaren, d.h. steuerbaren und nachprüfbaren Verformungs- und Spannungszustand zu ersetzen. Dabei ist das Erzeugen einer Druckvorspannung in radialer und tangentialer Richtung erwünscht, da hierdurch im späteren Betrieb die durch die Fliehkräfte verursachten Zugspannungen in diesen beiden Hauptrichtungen abgebaut werden. Dies wirkt sich in einer Erhöhung der Ermüdungsfestigkeit gerade dieser höchstbeanspruchten Zone aus. Auch die durch die Kaltverformung bewirkte Werkstoffverfestigung geht in diese Richtung. Ausserdem wird durch die erfindungsgemässe Bearbeitung der Nabenbohrungsinnenfläche die Oberflächengüte verbessert und die Kerbwirkungsgefahr herabgesetzt.

Die Erfindung wird anhand des nachfolgenden, durch Figuren erläuterten Ausführungsbeispiels beschrieben.

Dabei zeigt:

Fig. 1 das Verfahren der Verformung der Nabenbohrung eines Verdichterrades mittels Dorn;

Fig. 2 das Verfahren der Verformung der Nabenbohrung eines Verdichterrades mittels Walzrolle.

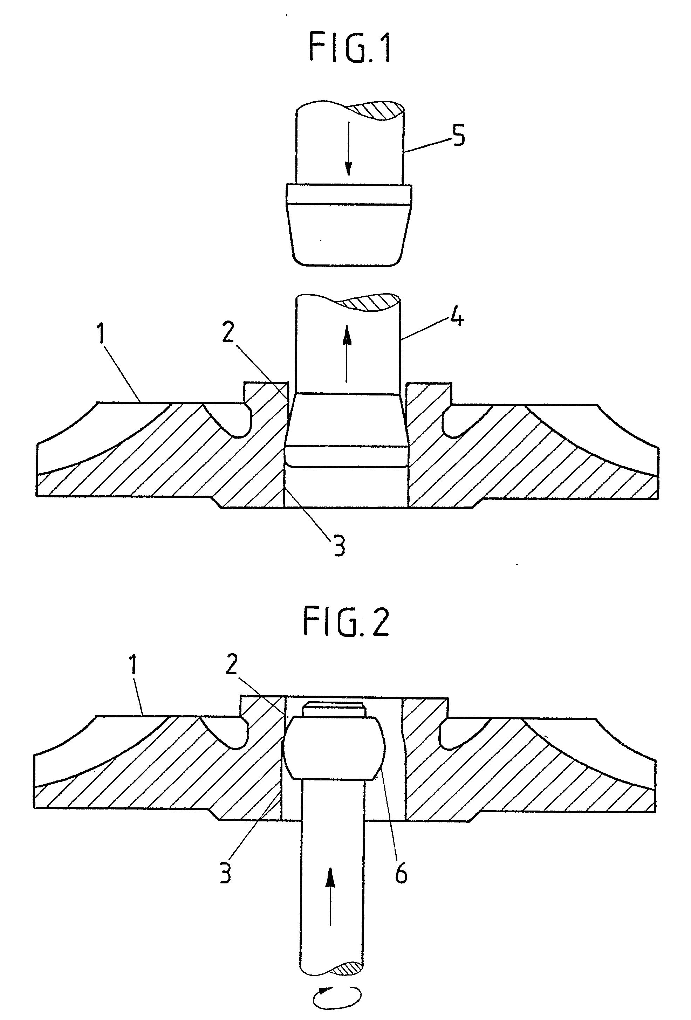

In Fig. 1 ist das Verfahren der Verformung der Nabenbohrung eines Verdichterrades (Radialverdichter als Bestandteil eines Abgas-Turboladers) mittels Dorn dargestellt. 1 ist das Turbolader-Verdichterrad. 2 stellt die Nabenbohrung vor dem Aufweiten (Rohzustand), 3 dieselbe Nabenbohrung nach dem Aufweiten (Endzustand) dar. 4 ist ein Ziehdorn, 5 ein Drückdorn. Die Pfeile geben die Bewegungsrichtung des jeweils verwendeten Werkzeugs an.

Fig. 2 zeigt das Verfahren der Verformung der Nabenbohrung eines Verdichterrades mittels Walzrolle. Die Bezugszeichen 1 bis 3 entsprechen denjenigen der Fig. 1. 6 ist die Walzrolle mit als Kugel-, Torus- oder Ellipsoidfläche ausgebildeter Oberfläche. Die Pfeile geben die Dreh- bzw. Vorschubbewegungsrichtung an.

*Ausführungsbeispiel:*

Siehe Fig. 1.

Aus einer aushärtbaren, warmfesten Aluminiumlegierung mit der Bezeichnung 2618 wurde ein Turbolader-Verdichterrad (Radialgebläse) gefertigt. Die Aluminiumlegierung hatte folgende Zusammensetzung:

| Si: | 0,1 -0,25 | Gew.-% |
|-----|-----------|--------|
| Fe: | 0,9 -1,3 | Gew.-% |
| Cu: | 1,9 -2,7 | Gew.-% |
| Mg: | 1,3 -1,8 | Gew.-% |
| Ni: | 0,9 -1,2 | Gew.-% |
| Zn: | 0,1 | Gew.-% |
| Ti: | 0,04-0,1 | Gew.-% |
| Al: | Rest | |

Aus einem warmgekneteten Barrenabschnitt wurde zunächst durch Gesenkschmieden ein Verdichterrad ähnlich 1, jedoch ohne Bohrung hergestellt. Danach wurde die Nabenbohrung durch Vorbohren auf ein Aufmass von 5 mm bezogen auf den Durchmesser gefertigt. Dann folgte eine Wärmebehandlung in Form eines Lösungsglühens bei 530° C während 4 h mit darauffolgendem Abschrecken in Wasser von 70° C. Nun wurde das Rad während 16 h bei einer Temperatur von 200° C warm ausgelagert. Nun wurde die Nabenbohrung 2 auf einen Durchmesser von 59,1 mm (Soll-Nennmass 60,0 mm) ausgedreht. Es folgte eine plastische Verformung der Nabenbohrung 3 auf den Nenndurchmesser von 60,0 mm mittels Durchziehen eines Ziehdorns 4. Die plastische Aufweitung betrug demnach 1,5%. Es ist dabei zu beachten, dass der Dorndurchmesser des Ziehdorns 4 grösser sein muss als der Nenndurchmesser der Nabenbohrung 3, da das Material um einen gewissen Betrag elastisch zurückfedert.

Beim herkömmlichen bisherigen Verfahren musste die Nabenbohrung vor dem Schleudern auf einen Durchmesser von 59,0 mm (1,0 mm aufmass) ausgedreht werden. Nach dem Schleudern bei 120% Nenndrehzahl betrug er 59,3 mm, d.h. die Bohrung hatte sich um 0,5% aufgeweitet. Dann musste der Rest durch Fertigdrehen auf das Mass 60,0 mm beseitigt werden.

Die Erfindung ist nicht auf das Ausführungsbeispiel beschränkt. Die plastische Verformung der Nabenbohrung 2 vor dem Schleudern kann in gleicher Weise mit Hilfe eines Drückdorns 5 oder einer Walzrolle 6 (Fig. 2) ausgeführt werden. Die Aufweitung, bezogen auf den Bohrungsdurchmesser, kann vorteilhafterweise je nach Werkstoff, Abmessungen und Konstruktion bis zu 2% betragen. Dies auch mit Rücksicht auf die bis zu 130% der Nenndrehzahl üblichen Schleuderdrehzahlen.

Das Verfahren ist prinzipiell auf Rotationskörper mit Nabenbohrungen aus den verschiedensten Werkstoffen anwendbar: Aluminiumlegierungen, Titanlegierungen, Stähle, warmfeste Stähle und hochwarmfeste Legierungen (z.B. Nickelbasis-Superlegierungen etc.)

## Patentansprüche

1. Verfahren zur Verhinderung der durch plastisches Fliessen bei der mit bis 130% Nenndrehzahl durchgeführten Schleuderprüfung verursachten Aufweitung der Nabenbohrung (2, 3) eines Turbomaschinenteils (1), dadurch gekennzeichnet, dass die Innenfläche der Nabenbohrung vor der Schleuderprüfung in radialer Richtung um bis 2% plastisch verformt wird.

2. Verfahren nach Anspruch 1, dadurch gekennzeichnet, dass das Turbomaschinenteil ein Turbolader-Verdichterrad (1) ist und dass die plastische Verformung der Nabenbohrung (2; 3) durch Hindurchziehen eines Ziehdorns (4) oder durch Hindurchdrücken eines Drückdorns (5) durch die Nabenbohrung (2; 3) bewerkstelligt wird.

3. Verfahren nach Anspruch 1, dadurch gekennzeichnet, dass das Turbomaschinenteil ein Turbolader-Verdichterrad (1) ist und dass die plastische Verformung der Nabenbohrung (2; 3) durch Fest- und Masswalzen mittels Walzrolle (6) bewerkstelligt wird.

## Claims

1. Method for preventing the expansion of the hub bore (2, 3) of a turbo-machine part (1) caused by plastic flow during the overspeed test carried out at up to 130% of the nominal rotational speed, characterised in that the internal surface of the hub bore is plastically deformed by up to 2% in the radial direction before the overspeed test.

2. Method according to Claim 1, characterised in that the turbo-machine part is a turbo-charger compressor impeller (1) and that the plastic deformation of the hub bore (2; 3) is produced by pulling a draw mandrel (4) through the hub bore (2; 3) or by pushing a press mandrel (5) through the hub bore (2; 3).

3. Method according to Claim 1, characterised in that the turbo-machine part is a turbo-charger compressor impeller (1) and that the plastic deformation of the hub bore (2; 3) is produced by consolidation rolling and dimensional rolling using a roller (6).

## Revendications

1. Procédé pour empêcher l'élargissement de l'alésage (2; 3) du moyeu d'un élément de turbomachine (1), résultant de l'écoulement plastique qui se produit au cours de l'essai de survitesse à 130% de la vitesse nominale, caractérisé en ce que la surface intérieure de l'alésage du moyeu est déformée plastiquement jusqu'à 2% en direction radiale, avant l'essai de survitesse.

2. Procédé suivant la revendication 1, caractérisé en ce que l'élément de turbomachine est une roue à aubes (1) d'un turbocompresseur à suralimentation et en ce que la déformation plastique de l'alésage du moyeu (2; 3) est réalisée par passage forcé, par tirage ou par poussage, d'un mandrin tiré (4) ou poussé (5) à travers l'alésage du moyeu (2; 3).

3. Procédé suivant la revendication 1, caractérisé en ce que l'élément de turbomachine est une roue à aubes (1) d'un turbocompresseur à suralimentation et en ce que la déformation plastique de l'alésage du moyeu (2; 3) est réalisée au moyen d'une molette (6).

# FIG.1

# FIG.2